(19) Europäisches Patentamt
European Patent Office
Office européen des brevets

(11) **EP 3 904 097 B1**

(12) **EUROPEAN PATENT SPECIFICATION**

(45) Date of publication and mention
of the grant of the patent:
**25.10.2023  Bulletin 2023/43**

(21) Application number: **19904552.7**

(22) Date of filing: **25.12.2019**

(51) International Patent Classification (IPC):
**B29B 9/12** *(2006.01)*      **B29B 9/16** *(2006.01)*
**B29C 64/153** *(2017.01)*    **B29C 64/165** *(2017.01)*
**B33Y 10/00** *(2015.01)*     **B33Y 70/00** *(2020.01)*
**B33Y 80/00** *(2015.01)*     B29B 7/00 *(2006.01)*
**B29B 9/06** *(2006.01)*

(52) Cooperative Patent Classification (CPC):
**B29B 9/12; B29B 9/16; B29C 64/153;**
**B29C 64/165; B33Y 10/00; B33Y 70/00;**
B29B 7/007; B29B 9/06; B29B 2009/125;
B29B 2009/165

(86) International application number:
**PCT/JP2019/050869**

(87) International publication number:
**WO 2020/138188 (02.07.2020 Gazette 2020/27)**

(54) **POWDER FOR POWDER LAMINATION MOLDING, ITS MANUFACTURING METHOD AND USE**

PULVER ZUM PULVERLAMINATFORMEN, DESSEN HERSTELLUNGSVERFAHREN UND VERWENDUNG

POUDRE POUR MOULAGE PAR LAMINAGE DE POUDRE, PROCÉDÉ DE FABRICATION ASSOCIÉ ET UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2018  JP 2018243230**

(43) Date of publication of application:
**03.11.2021  Bulletin 2021/44**

(73) Proprietor: **Mitsubishi Chemical Corporation**
**Chiyoda-ku**
**Tokyo 100-8251 (JP)**

(72) Inventors:
• **SUGIHARA, Masaki**
  **Tokyo 100-8251 (JP)**
• **KISHISHITA, Minoru**
  **Tokyo 100-8251 (JP)**
• **YAMANAKA, Yasushi**
  **Hiratsuka-shi, Kanagawa 254-0016 (JP)**

(74) Representative: **Vossius & Partner**
**Patentanwälte Rechtsanwälte mbB**
**Siebertstraße 3**
**81675 München (DE)**

(56) References cited:
JP-A- 2018 086 757      JP-A- 2018 086 757
US-A1- 2007 182 070    US-A1- 2007 232 753
US-A1- 2013 177 767    US-A1- 2015 321 255
US-A1- 2018 009 982

• M. LI ET AL: "Comparison of Particle Size Distributions Measured Using Different Techniques", PARTICULATE SCIENCE AND TECHNOLOGY, vol. 23, no. 3, 24 February 2007 (2007-02-24), pages 265-284, XP55269915, US ISSN: 0272-6351, DOI: 10.1080/02726350590955912

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a powder for powder bed fusion which includes a polybutylene terephthalate (hereinafter, polybutylene terephthalate is sometimes abbreviated as PBT) and to a method for producing the powder. In particular, the present invention relates to a powder for powder bed fusion which exhibits excellent powder layer forming properties in the printing of a three-dimensional article with a powder bed fusion apparatus, and to a method for producing such a powder.

Background Art

Powder bed fusion processes are a type of three-dimensional printing processes in which a powder material such as a resin is heated with a heating device to a temperature near the melting point of the resin powder and is sintered into a thin layer in a repeated manner to form a laminated three-dimensional article.

In the formation of a thin layer of a powder material, the powder material is sprayed onto a printing table (or a printing stage) and is leveled off with a re-coater (a blade or a roller) (hereinafter, this operation is sometimes referred to as "application" or " filling") into a powder layer with a uniform thickness.

A laser, an infrared lamp, a xenon lamp, a halogen lamp or the like is used as the heating device.

A heating medium such as a laser beam is applied to a printing area of the powder layer to melt and sinter the powder, and this operation is repeated until an article has built up. To ensure that a powder layer formed by the application of a powder will absorb the heating medium more efficiently, a predetermined medium is sometimes applied to the portion that is being modeled.

The powder bed fusion processes are a technique which recently attracts attention on account of the fact that the processes do not require molds and can manufacture articles with high reliability from a variety of resin powders having a degree of heat resistance.

Patent Literature 1 discloses a copolymerized PBT powder material for powder bed fusion which is suited for producing low-water absorption and highly heat resistant articles. This copolymerized PBT includes 3 to 30 mol% of a comonomer component and has a melting point of 200 to 215°C. The PBT powder material of Patent Literature 1 is obtained by pulverizing PBT pellets through at least one of impact and shear action. Patent Literature 1 describes that the 50% average particle size of the powder is preferably in the range of 10 to 100 $\mu$m but is silent with respect to circularity.

Regarding the temperature at the time of printing, Patent Literature 1 describes that the temperature is set 5 to 15°C below the melting point of the resin. Specifically, Patent Literature 1 describes an example in which a resin having a melting point of 208°C was modeled at a temperature of the printing area of 190°C.

Patent Literature 2 discloses a method of manufacturing a solid freeform fabrication object, wherein a resin powder with a defined particle size distribution and (Mv/Mn)ratio may be used. Patent Literature 3 relates to a process for the layer-by-layer moldless production of three-dimensional shaped products, wherein a resin powder with a defined median grain diameter and a defined grain size distribution may be used. In both documents, PBT is mentioned as a resin for the resin powder.

Patent Literature 1: WO 2016/121013
Patent Literature JP 2018086757 A (cf. US 2018/147780 A1)
Patent Literature 3: US 2007/182070 A1

When a thermoplastic resin such as PBT is pulverized in the manner described in Patent Literature 1, shear heat generated at the time of pulverization causes undesired phenomena such as a decrease in elastic modulus of the resin and softening of the resin. As a result, problems occur such as the powder shape being elongated due to the lowered elastic modulus, and rotary pulverizer blades being contaminated or buried with the resin that has become softened.

If a powder is obtained in an elongated form by pulverization, the particles will not have roundness suited for printing, that is, the circularity will be low, and the pulverized particles will be large and vary widely in size to show a very broad grain size distribution. Such a powder is incapable of forming a smooth powder layer with a uniform thickness on a printing table, and the result is uneven thickness or unoccupied sites (voids or vacancies). Such a nonuniform powder layer cannot be melted uniformly when irradiated with a heating medium. Further, the printing accuracy is impaired, and the desired article cannot be obtained in many cases.

Rotary pulverizer blades and the like which have been contaminated or buried with resins cannot perform well and fail to pulverize the resin into the desired size. In an extreme case, the apparatus needs to be suspended to, for example, replace or clean the rotary blades.

Summary of Invention

The present invention aims to solve the problems discussed above.

An object of the present invention is to provide a powder for powder bed fusion including PBT which benefits from excellent crushability and is prevented from the elongation of the particles or the softening of the resin even when the resin has been pulverized with a rotary blade or the like, and which has a specific, relatively sharp grain size distribution and can form a uniformly thick powder layer without vacancies in a printing process and thus can be built up into a desired article with high accuracy.

Solution to Problem

The present inventors have found that the above object can be achieved by the pulverization of PBT having specific requirements, and have completed the present invention based on the finding.

A first aspect of the present invention resides in:

a powder for powder bed fusion having a grain size distribution where D10 is not less than 20 $\mu$m and not more than 42 $\mu$m, D50 is not less than 42 $\mu$m and not more than 70 $\mu$m, and D90 is not more than 100 $\mu$m, the powder including polybutylene terephthalate having a melting peak half width in a DSC chart of not less than 1°C and not more than 10°C.

The polybutylene terephthalate comprises structural units derived from a terephthalic acid component and structural units derived from 1,4-butanediol, and further comprises additional structural units derived from a dicarboxylic acid component other than terephthalic acid or from a diol component other than 1,4-butanediol.

A second aspect of the present invention resides in:

a method for producing the powder for powder bed fusion including a pulverization step performed in a manner of pulverization through at least an impact and/or a shear action.

A third aspect of the present invention resides in the use of the powder for powder bed fusion in accordance with the invention in a powder bed fusion process in which the powder material is heated with a heating device to a temperature near the melting point of the resin powder and is sintered into a thin layer in a repeated manner to form a laminated three-dimensional article.

Advantageous Effects of Invention

The powder for powder bed fusion of the present invention includes PBT having a specific melting peak half width in a DSC chart and has a specific, relatively sharp grain size distribution. As a result of this configuration, the powder for powder bed fusion of the present invention can be applied with a good application factor (filling factor) when modeled by a powder bed fusion process and can form a homogenous powder layer having a uniform thickness and free from vacancies (defects). Such a powder layer can be melted uniformly by the application of a heating medium. Further, the powder is free from blocking problems, and exhibits good printing properties and can be built with high accuracy into a target three-dimensional article having low surface roughness, no warpage and few voids.

According to the method of the present invention, such a powder for powder bed fusion as described above is produced through a pulverization step performed in a manner of pulverization through at least an impact and/or a shear action. In this manner, the powder for powder bed fusion can be produced efficiently without causing problems such as the powder shape being elongated by the lowering of elastic modulus, or rotary pulverizer blades being contaminated or buried with the resin that has become softened.

Description of Embodiments

The best modes for carrying out the present invention will be described in detail hereinbelow. However, the constituent requirements described hereinbelow are only typical examples of the embodiments of the present invention, and do not limit the scope of the present invention thereto.

[Powder for powder bed fusion]

The powder for powder bed fusion according to the present invention has a grain size distribution where D10 is not less than 20 $\mu$m and not more than 42 $\mu$m, D50 is not less than 42 $\mu$m and not more than 70 $\mu$m, and D90 is not

more than 100 μm, includes polybutylene terephthalate having a melting peak half width in a DSC chart of not less than 1°C and not more than 10°C, and the polybutylene terephthalate is a copolymerized PBT which comprises structural units derived from a terephthalic acid component and structural units derived from 1,4-butanediol, and further comprises additional structural units derived from a dicarboxylic acid component other than terephthalic acid or from a diol component other than 1,4-butanediol.

The powder for powder bed fusion of the present invention which includes PBT having a predetermined melting peak half width in a DSC chart and has a specific, relatively sharp grain size distribution may be effectively obtained using PBT that is a copolymerized PBT satisfying preferred conditions described later.

In the following, polybutylene terephthalate as defined in the annexed claims that is a resin material of the powder for powder bed fusion of the present invention is sometimes written as the "inventive PBT" or the "inventive copolymerized PBT".

The powder for powder bed fusion of the present invention is produced from a raw material that is a resin composition including the PBT as defined in the annexed claims and other optional components such as stabilizers described later. This composition is sometimes written as the "inventive resin composition".

<Reasons behind advantageous effects of the present invention>

The reasons as to why the advantageous effects of the present invention are still unclear but are probably as described below.

The powder for powder bed fusion of the present invention is a powder including polybutylene terephthalate, and is thus comparable to conventional products (polyamides) in heat resistance, chemical resistance and article strength and has lower water absorptivity to show little change in physical properties after being modeled.

Further, the resin is pulverized and classified so that the particle sizes will vary appropriately and the grain size distribution will be controlled as specified in the present invention. Consequently, the powder attains a good filling factor and high printing properties.

Further, the melting peak half width in a DSC chart is controlled to fall in the appropriate range specified in the present invention by, for example, solid-state polymerization of isophthalic acid or the like into polybutylene terephthalate to highly crystalize the polymer. Consequently, the powder obtained by pulverization has a high circularity and is free from elongation (whiskers) to attain a good filling factor and high printing properties.

<Composition of copolymerized PBT>

The inventive copolymerized PBT is preferably a polyester including comonomer components in which a terephthalic acid component is a major (65 mol% or more) dicarboxylic acid component and 1,4-butanediol is a major (65 mol% or more) diol component. Preferably, 35 mol% or less of the dicarboxylic acid components is represented by a component other than terephthalic acid, and this proportion is more preferably 30 mol% or less, still more preferably 25 mol% or less, and particularly preferably 20 mol% or less. Further, 35 mol% or less of the diol components in the PBT is preferably represented by a component other than the 1,4-butanediol component, and this proportion is more preferably 30 mol% or less, still more preferably 25 mol% or less, and particularly preferably 20 mol% or less.

The inventive copolymerized PBT is preferably a copolymerized polyester in which structural units derived from a terephthalic acid component represent not less than 65 mol% and structural units derived from a dicarboxylic acid component other than terephthalic acid represent not more than 35 mol% of all the structural units from dicarboxylic acid components taken as 100 mol%, and in which structural units derived from 1,4-butanediol represent not less than 65 mol% and structural units derived from a diol component other than 1,4-butanediol represent not more than 35 mol% of all the structural units from diol components taken as 100 mol%.

Among the comonomer components, examples of the dicarboxylic acid components other than terephthalic acid include isophthalic acid, naphthalenedicarboxylic acid and succinic acid (and derivatives thereof). Examples of the diol components other than 1,4-butanediol include ethylene glycol, diethylene glycol, 1,3-propanediol, 1,4-cyclohexanedimethanol, 2,4-diethyl-1,5-pentanediol, butyl ethyl propanediol, spiroglycol, tricyclodecanedimethanol and 9,9-bis[4-(2-hydroxyethoxy)phenyl]fluorene. The comonomer components are not limited to those described above.

Among the comonomer components, isophthalic acid is particularly preferably used for reasons such as because isophthalic acid is easily available in industry and polymer production is easy. A plurality of comonomer components may be used at the same time.

When the copolymerized PBT includes an isophthalic acid component as a comonomer component, the copolymer preferably includes the terephthalic acid component in a proportion of 65 to 95 mol%, particularly preferably 70 to 90 mol%, and most preferably 75 to 85 mol%, and the isophthalic acid component in a proportion of 5 to 35 mol%, particularly preferably 10 to 30 mol%, and most preferably 15 to 25 mol%, relative to all the dicarboxylic acid components taken as 100 mol%. These proportions are preferable from the point of view of heat resistance and to ensure that appropriate crystallinity will be exhibited during printing.

<Physical properties of PBTs>

To avoid an excessive decrease in elastic modulus when the resin is melted at the time of printing, the melting peak half width in a DSC chart of the inventive PBT is not less than 1°C and not more than 10°C, preferably not less than 1°C and not more than 9°C, more preferably not less than 1°C and not more than 8°C, still more preferably not less than 1°C and not more than 7°C, particularly preferably not less than 1°C and not more than 6°C, and most preferably not less than 1°C and not more than 5°C.

By virtue of the melting peak half width in a DSC chart of the PBT falling in the above desired range, the material can be modeled while avoiding printing defects stemming from a decrease in elastic modulus, and thus can form an article with stable dimensional accuracy. Further, the welding of resin particles at the time of spraying is suppressed, and the powder can be applied without being hindered by the fused particles. That is, powder applicability is enhanced.

To ensure that the elastic modulus enhanced by crystallization will prevent the elongation of the resin during pulverization, the heat of melting in a DSC chart of the inventive PBT is preferably not less than 45 J/g, more preferably not less than 50 J/g, and still more preferably not less than 53 J/g, and is preferably not more than 80 J/g, more preferably not more than 75 J/g, still more preferably not more than 70 J/g, particularly preferably not more than 60 J/g, and most preferably not more than 55 J/g.

When the heat of melting in a DSC chart of the PBT is in the above desired range, the enhancement in elastic modulus by the crystallization of the resin compensates for a decrease in elastic modulus of the resin by the generation of shear heat during pulverization and can prevent the softening of the resin even when the resin is pulverized with rotary pulverizer blades.

The lower limit of the melting point of the inventive PBT, although not particularly limited, is preferably 170°C or above, more preferably 175°C or above, still more preferably 180°C or above, particularly preferably 185°C or above, and most preferably 190°C or above from the point of view of the heat resistance of articles that are obtained. The upper limit of the melting point of the inventive PBT, although not particularly limited, is preferably 215°C or below, more preferably 210°C or below, still more preferably 205°C or below, particularly preferably 199°C or below, and most preferably 195°C or below from the point of view of the amount of energy required for melting the material at the time of printing.

From the point of view of crystallinity, the lower limit of the weight average molecular weight (Mw) of the inventive PBT is preferably more than 80000, more preferably 82000 or more, still more preferably 85000 or more, particularly preferably 90000 or more, and most preferably 95000 or more. The upper limit is not particularly limited, but, from the point of view of printing properties, is preferably 150000 or less, more preferably 130000 or less, still more preferably 110000 or less, particularly preferably 100000 or less, and most preferably 95000 or less.

The ratio (Mv/Mn) of the volume average particle size (Mv) to the number average particle size (Mn) of the inventive PBT is not particularly limited. From the point of view of printing properties, it is usually preferable that the lower limit be 1.10 or above, more preferably 1.15 or above, still more preferably 1.20 or above, particularly preferably 1.25 or above, and most preferably 1.30 or above. Further, the upper limit is preferably 2.0 or below, more preferably 1.8 or below, still more preferably 1.6 or below, particularly preferably 1.45 or below, and most preferably 1.40 or below.

The melting peak half width and the heat of melting in a DSC chart, the melting point, the weight average molecular weight (Mw), the volume average particle size (Mv) and the number average particle size (Mn) of the PBT are measured by, for example, the methods described in Examples later.

In Examples described later, these properties are measured with respect to PBTs including a phenolic stabilizer. The presence or absence of small amounts of additives such as stabilizers does not affect the measured values.

<Methods for producing copolymerized PBTs>

The inventive copolymerized PBT may be produced by any known method without limitation. For example, first, a terephthalic acid component and 1,4-butanediol together with other comonomer components may be subjected to transesterification reaction and/or esterification reaction to give a low polymer, and then the low polymer obtained may be subjected to melt polycondensation reaction to give a polymer. These reactions may be carried out batchwise or continuously.

The terephthalic acid component that is used may be terephthalic acid and/or one, or two or more kinds of terephthalic acid derivatives such as terephthalic acid alkyl (preferably C1 alkyl) esters and terephthalic acid halides. The isophthalic acid component used as a comonomer component may be isophthalic acid and/or one, or two or more kinds of isophthalic acid derivatives such as isophthalic acid alkyl (preferably C1 alkyl) esters and isophthalic acid halides. The same applies to other dicarboxylic acid components.

For example, the low polymer may be obtained by performing the transesterification reaction and/or the esterification reaction in a single-stage or multi-stage reaction apparatus in the presence or absence of a catalyst at atmospheric pressure or increased pressure.

For example, the melt polycondensation may be performed in a single-stage or multi-stage reaction apparatus in the presence of a catalyst at a reduced pressure while performing heating and distilling off water and alcohol byproducts out of the system. Examples of the polycondensation catalysts used in this method include compounds of antimony, germanium, titanium and aluminum.

In addition to the above catalysts, additives such as reaction aids and antioxidants may be used, with examples including phosphorus compounds such as orthophosphoric acid, phosphorus acid, hypophosphorous acid, polyphosphoric acid, and esters and metal salts thereof; alkali metal compounds including sodium compounds such as sodium hydroxide and sodium benzoate, lithium compounds such as lithium acetate, and potassium compounds such as potassium hydroxide and potassium acetate; and alkaline earth metal compounds such as magnesium acetate and calcium acetate.

The reaction rate may be enhanced by controlling the conditions such as, for example, increasing the degree of vacuum, increasing the heat-up rate or increasing the rate of refreshing the reaction liquid surface.

The copolymerized PBT obtained by melt polycondensation is usually withdrawn in the form of a strand or a sheet from an outlet port provided at the bottom of the melt polycondensation tank, and is thereafter cut with a cutter into granules such as pellets or chips (for example, about 3 to 10 mm in length) while or after being cooled with water.

(Polycondensation catalysts)

In the production of the inventive copolymerized PBT, it is particularly preferable to use a titanium compound, for example, tetrabutyl titanate as the polycondensation catalyst. Titanium compounds generally have high catalytic activity and generate less foreign substances to satisfactorily catalyze the production of a copolymerized PBT particularly suited for powder bed fusion processes.

The copolymerized PBT may be produced particularly effectively by adding a titanium compound as the catalyst separately in the low polymer production step and the polycondensation step.

The amounts in which the titanium compound is added are appropriately 10 to 40 mass ppm in the low polymer production step and 30 to 70 mass ppm in the polycondensation step, both in terms of titanium element, with a total of 40 to 110 mass ppm with respect to the copolymerized PBT that is produced. When the total amount is 40 mass ppm or more, a high polycondensation rate may be maintained. When the total amount is 110 mass ppm or less, the increase in yellowness arising during heat treatment may be suppressed. The smaller the amounts of the titanium compound added, the less the yellowness during heat treatment.

(Approaches to obtaining preferred copolymerized PBTs)

The inventive copolymerized PBT which satisfies the preferred ranges of properties such as the melting peak half width and the heat of melting in a DSC chart, the melting point and the weight average molecular weight, may be produced by an approach that is not necessarily limited and is variable depending on the process or the apparatus. An example approach is solid-state polymerization in which the polymer after melt polycondensation is further heated in the solid state to increase the molecular weight and to control the crystallinity. Alternatively, the powder after the polymerization may be heated for a certain amount of time, or a crystal nucleating agent may be added. According to a preferred approach, the pellets obtained by the melt polycondensation may be polymerized in the solid state for a predetermined amount of time at a temperature at least 100°C higher than the glass transition temperature of the PBT, the polymer being then pulverized. In another preferred approach, the pellets obtained may be polymerized in the solid state at a temperature lower than the melting point of the PBT for a predetermined amount of time and may be thereafter pulverized. More specifically, this solid-state polymerization after melt polycondensation may be performed at a temperature that is preferably 5 to 50°C lower than the melting point, more preferably 10 to 30°C lower than the melting point, at a high degree of vacuum, preferably 0.40 to 0.01 MPa, preferably for 10 to 48 hours. If the temperature in this solid-state polymerization falls below the preferred range described above, the molecular weight will not be sufficiently increased and the melting peak half width tends to be broad. The preferred approach described above allows the crystallinity to be controlled while the molecular weight is increased. Thus, the resultant polymer can be pulverized excellently even with rotary blades or the like while reducing the probability that the particles will be elongated or the resin will be softened. The powder for powder bed fusion thus produced can advantageously form a uniformly thick powder layer without vacancies at the time of printing.

<Stabilizers>

The powder for powder bed fusion of the present invention preferably contains a stabilizer.

Examples of the stabilizers include phenolic stabilizers, amine stabilizers, phosphorus stabilizers and thioether stabilizers. Among these, phosphorus stabilizers and phenolic stabilizers are preferable in the present invention, and phenolic stabilizers are more preferable.

Preferred phenolic stabilizers are hindered phenolic stabilizers, with examples including pentaerythritol tetrakis[3-(3,5-di-tert-butyl-4-hydroxyphenyl)propionate], octadecyl-3-(3,5-di-tert-butyl-4-hydroxyphenyl)propionate, pentaerythritol tetrakis(β-laurylthiopropionate), thiodiethylene bis[3-(3,5-di-tert-butyl-4-hydroxyphenyl)propionate], N,N'-hexane-1,6-diyl bis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

In particular, pentaerythritol tetrakis[3-(3,5-di-tert-butyl-4-hydroxyphenyl)propionate], octadecyl-3-(3,5-di-tert-butyl-4-hydroxyphenyl)propionate, and pentaerythritol tetrakis(β-laurylthiopropionate) are preferable.

Specific examples of the phenolic stabilizers include "IRGANOX 1010" and "IRGANOX 1076" manufactured by BASF (trade names, the same applies hereinbelow), and "ADK STAB AO-50", "ADK STAB AO-60" and "ADK STAB AO-412S" manufactured by ADEKA CORPORATION.

The powder for powder bed fusion of the present invention may contain a single kind of a stabilizer or may contain a combination of any two or more kinds of stabilizers in any ratio.

In the powder for powder bed fusion of the present invention, the content of the stabilizer is preferably not less than 0.01 part by mass, more preferably not less than 0.05 parts by mass, still more preferably not less than 0.08 parts by mass, and particularly preferably not less than 0.1 part by mass with respect to 100 parts by mass of the PBT. The upper limit of the content of the stabilizer is preferably 5 parts by mass or less, more preferably 4 parts by mass or less, and still more preferably 3 parts by mass or less. The above lower limit of the content of the stabilizer ensures that thermal stability tends to be enhanced. The above upper limit of the content of the stabilizer effectively suppresses the amount of gas generation and thus makes it possible to avoid troubles during three-dimensional printing.

The stabilizer and various additives described later may be incorporated into an inventive resin composition by being melt-kneaded together with the PBT as will be described later in the methods for producing an inventive resin composition. The stabilizer and other additives may be added to the reaction system during a step in the production of PBT, for example, during the step of transesterification reaction and/or esterification reaction or the subsequent step of melt polycondensation reaction.

<Additional components>

The powder for powder bed fusion of the present invention may be a resin composition including additional resin components and additives other than those described hereinabove. Such a composition is sometimes written as the inventive resin composition.

Examples of the additional resin components include thermoplastic resins such as polyester resins other than PBTs.

Examples of the additional additives include crystal nucleating agents, antioxidants, anti-coloring agents, pigments, dyes, ultraviolet absorbers, release agents, slip agents, flame retardants, antistatic agents, inorganic fibers, organic fibers, inorganic particles and organic particles.

Examples of the flame retardants include those compounds described in paragraphs 0033 to 0040 of JP-2015-025127 A.

<Resin compositions and production thereof>

The inventive resin composition may be produced by any method without limitation as long as the components may be formed into a composition. The inventive resin composition may be produced by mixing the components and melt-kneading the mixture. For example, the inventive resin composition may be produced by mixing beforehand the inventive PBT, a stabilizer and optionally other components with a mixer such as a tumbling mixer or a Henschel mixer, and thereafter melt-kneading the mixture with a device such as a Banbury mixer, a roll, a Brabender mixer, a single-screw kneading extruder, a twin-screw kneading extruder or a kneader.

Alternatively, the inventive resin composition may be produced in such a manner that the components without being mixed beforehand or after premixing of some of the components are supplied to an extruder through feeders and are melt-kneaded with one another.

Still alternatively, the inventive resin composition may be produced in such a manner that some of the components are mixed together beforehand and the mixture is supplied to an extruder and melt-kneaded to give a resin composition as a masterbatch, the masterbatch is then mixed with the remaining components, and the mixture is melt-kneaded.

The heating temperature at the time of melt-kneading may be usually selected appropriately from the range of 220 to 300°C. An excessively high heating temperature brings about a risk that the resin may be deteriorated or a gas tends to be generated by decomposition. Thus, it is desirable to select the screw configuration in consideration of factors such as the generation of shear heat. To prevent decomposition during kneading or during printing in a downstream step, it is desirable to use a stabilizer and/or an antioxidant.

The melting point of the inventive resin composition is not particularly limited. From the point of view of the heat resistance of articles that are obtained, the lower limit of the melting point is preferably 150°C or above, more preferably 170°C or above, still more preferably 175°C or above, particularly preferably 180°C or above, and most preferably 185°C or above. The upper limit is preferably 227°C or below, more preferably 215°C or below, still more preferably 210°C or below, particularly preferably 205°C or below, and most preferably 195°C or below. The content of the PBT in the inventive resin composition is preferably not less than 50 parts by mass, more preferably not less than 60 parts by mass, still more preferably not less than 70 parts by mass, particularly preferably not less than 80 parts by mass, and most preferably not less than 90 parts by mass with respect to 100 parts by mass of the resin composition. The upper limit is usually 100 parts by mass, and the additional components are appropriately present.

<Methods for producing powder for powder bed fusion>

The powder for powder bed fusion of the present invention may be produced by a powdering process such as melt granulation in which the inventive resin composition is melted near the melting point and the melt is formed into fibers and is then cut, or pulverization in which a resin material composed of the inventive resin composition is cut or broken by the application of impact or shear. To ensure that the powder will exhibit enhanced applicability during three-dimensional printing, it is preferable that the particles be round, that is, the circularity be high. In view of this fact, the inventive resin composition, preferably the resin composition including the inventive copolymerized PBT is preferably powdered in an appropriate powdering manner selected so that the powder obtained will have the preferred shape.

Examples of the pulverization devices which may be used include stamp mills, ring mills, stone mills, mortars, roller mills, jet mills, high-speed rotary mills, hammer mills, pin mills, container-driving type mills, disc mills and medium-stirring mills.

To prevent the elongation of the resin material due to the generation of shear heat during pulverization, the inside of the powdering system may be cooled with liquid nitrogen or the like to lower the resin temperature during pulverization so that the material will be powdered by brittle fracturing rather than by ductile fracturing.

In the present invention, the material is preferably pulverized using a high-speed rotary mill capable of producing a powder having a grain size distribution and a shape which are suited for three-dimensional printing. In this manner, fluidity and powder applicability during printing are advantageously further enhanced.

To ensure that the powder will have a round surface, the temperature at the time of pulverization is preferably in a temperature range where ductile fracture is possible. The pulverization temperature is preferably not less than 0°C, more preferably not less than 10°C, still more preferably not less than 20°C, and particularly preferably not less than 40°C, and is preferably not more than 80°C, more preferably not more than 70°C, still more preferably not more than 65°C, and particularly preferably not more than 60°C. Here, the pulverization temperature is the temperature inside the pulverization system, and corresponds to, for example, the temperature of exhaust gas from the pulverization tank as will be described in Examples later.

To increase the circularity by removing elongated particles from the pulverized powder, it is preferable to perform a classification step after the pulverization.

Examples of the classification methods in this case include air classification and sieve classification.

<Physical properties of powder for powder bed fusion >

In the grain size distribution of the powder for powder bed fusion of the present invention, D10 which represents a volume percentage of 10% is not less than 20 $\mu$m, preferably not less than 25 $\mu$m, and more preferably not less than 30 $\mu$m from the points of view of uniform sprayability and the filling factor in the formation of powder layers (the filling factor used herein is an indicator of applicability and is determined by the method described later in Examples). The upper limit of D10 is 42 $\mu$m or less, preferably 41 $\mu$m or less, and more preferably 40 $\mu$m or less to ensure that such particles will fill gaps between the particles when the powder is applied on a printing table.

In the grain size distribution of the powder for powder bed fusion of the present invention, D50 which represents a volume percentage of 50% is not less than 42 $\mu$m, preferably not less than 43 $\mu$m, and more preferably not less than 44 $\mu$m and is not more than 70 $\mu$m, preferably not more than 65 $\mu$m, and more preferably not more than 60 $\mu$m to ensure that the powder will be applied in a predetermined thickness during printing.

In the grain size distribution of the powder for powder bed fusion of the present invention, D90 which represents a volume percentage of 90% is not more than 100 $\mu$m, preferably not more than 98 $\mu$m, and more preferably not more

than 96 μm from the point of view of resolution during printing. The lower limit of D90 is not particularly limited, but is usually 70 μm or more from the point of view of application efficiency at the time of applying the powder on a printing table.

The grain size distribution of the powder for powder bed fusion is measured by the method described later in Examples.

From the point of view of powder sprayability or the filling factor at the time of printing, the circularity of the powder for powder bed fusion of the present invention is preferably not less than 0.8, more preferably not less than 0.82, still more preferably not less than 0.85, and particularly preferably not less than 0.9. The upper limit of the circularity is usually 1.0.

The circularity of a powder is a value obtained by dividing the projected area of a particle by the area of a circle having a diameter equal to the largest diameter of the particle, and is measured with a circularity measuring device.

The bulk density of the powder for powder bed fusion of the present invention is preferably not less than 0.2 g/cc, more preferably not less than 0.3 g/cc, and still more preferably not less than 0.4 g/cc, and is preferably not more than 0.8 g/cc, more preferably not more than 0.7 g/cc, and still more preferably not more than 0.6 g/cc from the points of view of the filling properties and applicability of the powder at the time of printing.

The bulk density of the powder for powder bed fusion of the present invention is measured with a density measuring device.

The application factor (filling factor) of the powder for powder bed fusion of the present invention is not less than 0.8, more preferably not less than 0.85, and still more preferably not less than 0.9 from the point of view of uniform filling properties of the powder at the time of printing. The upper limit of the application factor (filling factor) is usually 1.0.

The application factor (filling factor) is measured by the method described later in Examples.

[Powder bed fusion processes]

A powder bed fusion process using the powder for powder bed fusion c the present invention described hereinabove is a process in which the powder material is heated with a heating device to a temperature near the melting point of the resin powder and is sintered into a thin layer in a repeated manner to form a laminated three-dimensional article.

The powder bed fusion process of the present invention may be performed in a usual manner using a common powder additive manufacturing apparatus.

An example of the powder bed fusion apparatuses which may be used includes a printing stage (a printing table), a thin layer forming unit that forms a thin layer of the powder material on the printing stage, a heating unit that heats the thin layer by laser irradiation of the like to fuse together the particles of the powder material and thereby to form an article layer, a moving unit that moves the printing stage in the laminating direction (in the vertical direction), and a control unit that controls the above members so that thin layers are formed and heated repeatedly into a stack of article layers and the stage is moved after each stacking.

In the case of, for example, laser heating, an article may be modeled using the above powder bed fusion apparatus through the following Steps (1) to (4).

(1) A step in which a thin layer of the powder material is formed.
(2) A step in which the thin layer is preheated and is selectively irradiated with a laser beam to fuse the powder material into an article layer.
Alternatively, this step may be such that the thin layer is preheated, a fusion accelerator (a component that accelerates the fusion of the resin) and a surface decorating agent (a component that forms the outline of the layer) are selectively sprayed to the thin layer, and thereafter the entirety is irradiated with an infrared lamp, a xenon lamp or a halogen lamp to fuse together the selected particles into an article layer.
(3) A step in which the printing stage is lowered by the thickness of the article layer formed.
(4) Steps in which Steps (1) to (3) are repeated a plurality of times in this order to build up the article layers.

In Step (1), a thin layer of the powder material is formed. For example, the powder material supplied from a powder supply section is spread into a flat bed on the printing stage with use of a re-coater (a blade or a roll). The thin layer is formed directly on the printing stage or is formed in contact with the top of a bed of the powder material that has been already spread or an article layer that has been already formed.

The thickness of the thin layer may be set in accordance with the thickness of the article layer. The thickness of the thin layer may be set appropriately in accordance with the accuracy with which a three-dimensional article is to be manufactured. The thickness of the thin layer is usually about 0.01 to 0.3 mm.

In Step (2), the portion of the thin layer which should form an article layer is selectively irradiated with a laser beam to fuse together the powder material in the irradiated portion. As a result, the particles adjacent to one another are fused into an integral melt which then forms an article layer. During this process, the powder material that receives the energy of the laser beam is also fused together with the layers that have been already formed and consequently the layers adjacent to one another are bonded together. The portion of the powder material that is out of the range of laser irradiation is collected as excess powder and is reused as a recycle powder.

Alternative to the selective laser irradiation, a fusion accelerator (a component that accelerates the fusion of the resin) and a surface decorating agent (a component that forms the outline of the layer) may be selectively sprayed to the thin layer, and thereafter the entirety may be irradiated with an infrared lamp, a xenon lamp or a halogen lamp to fuse together the selected particles. Similarly to the laser irradiation, the portion of the powder material that remains intact without fusion is collected as excess powder and is reused as a recycle powder.

In Step (3), the printing stage is lowered by the thickness of the article layer formed in Step (2) to be ready for the next repetition of Step (1).

The temperature of the printing area during the powder bed fusion is preferably about 5 to 20°C lower than the melting point of the resin composition that is used. The amount of printing time is variable depending on the size of the article.

EXAMPLES

Hereinbelow, the present invention will be described in greater detail based on EXAMPLES.

[Methods for measuring physical properties of PBT]

<Melting point, melting peak half width and heat of melting>

5 to 7 mg of a PBT powder was weighed out and was filled into a sample pan to prepare a measurement pan. In a differential scanning calorimeter (Diamond DSC manufactured by PerkinElmer Co., Ltd., power-compensated type), the temperature was raised from 20°C to 250°C at a heat-up rate of 10°C/min in a nitrogen atmosphere. The DSC curve obtained in the first heating process was analyzed. The temperature at the top of the endothermic peak was adopted as the melting point, and the baseline was drawn by connecting the start and the end of the endothermic peak. Further, the width of the endothermic peak at the middle of a line segment drawn in the vertical axis direction from the endothermic peak top to the baseline was defined as the half width. Furthermore, the area of the region enclosed by the endothermic peak and the extension of the baseline was defined as the heat of melting.

[Definition of pulverization temperature]

A material to be pulverized was introduced into a pulverizer through a feeder and was mechanically pulverized into a powder. During this process, the pulverization temperature was determined by measuring the temperature of air discharged from the pulverizer tank.

[Powder evaluation methods]

<Grain size distribution, volume average particle size (Mv) and number average particle size (Mn)>

5 g of a powder was weighed out and was analyzed with a grain size distribution analyzer (MT3300 manufactured by Microtech) to determine the grain size distribution of the powder. With respect to the grain size distribution obtained, the particle sizes D10, D50 and D90 at the powder frequency distributions of 10%, 50% and 90%, respectively, were determined. Further, Mv/Mn was calculated using the average particle size (Mn) based on the number distribution, and the average particle size (Mv) based on the volume distribution of the particles determined in the above measurement.

<Weight average molecular weight (Mw)>

A measurement sample was dissolved with a concentration of 0.1 mass% into a 1/1 by mass solution of 1,1,1,3,3,3-hexafluoroisopropanol and chloroform. The resultant solution was further diluted to 0.02 mass% with chloroform. The solution thus obtained was filtered through a 0.45 $\mu$m PTFE filter to give a sample for size exclusion chromatography (SEC) analysis.

Molecular weight calibration standards were prepared by dissolving into chloroform 12 kinds of polystyrenes having a known molecular weight. The SEC measurement was performed in the same manner as for the sample.

A molecular weight calibration curve was created by plotting the elution time of each of the 12 types of polystyrenes having a known molecular weight against the Log molecular weight.

The measurement conditions are as follows.

Columns: TSK Gel G5000H$_{HR}$ + G3000H$_{HR}$
(7.8 mm diameter × 300 mm length × 2)
Temperature: 40°C
Mobile phase: 0.5% acetic acid in chloroform solution
Flow rate: 1.0 mL/min
Sample concentration: 0.02 wt%
Injection volume: 50 μL
Detector: UV
Detection wavelength: 254 nm
Molecular weight calibration standard samples: Monodispersed polystyrenes

<Circularity>

3 to 5 g of a powder was weighed out and was projected using a circularity measuring device (FPIA-3000S, Sysmex). The area and the length of the outline (the perimeter) of a projected particle were measured, and the circularity was calculated using the formula below. The calculation was made with respect to 80 particles, and the average of the values obtained was determined as the circularity of the powder.

$$Circularity = (Length\ of\ the\ perimeter\ of\ a\ circle\ having\ the\ same\ area\ as\ the\ area\ of\ the\ projected\ particle)/(Length\ of\ the\ outline\ of\ the\ particle\ in\ the\ projection)$$

<Application factor (filling factor)>

1 g of a powder was placed into a recess on a table having a size of 20 mm × 20 mm and a depth of 0.2 mm, and a roller was rolled over the table at a speed of 3 mm/sec to level off the powder in the recess. The volume of the powder filled in the recess was calculated from the weight and specific gravity of the powder in the recess, and the volume percentage of the filled powder relative to the volume of the recess was determined as the application factor (the filling factor) of the powder.

<Bulk density>

70 to 100 g of a powder was weighed out and was analyzed with a density measuring device (MT-1000, SEISHIN ENTERPRISE Co., Ltd.) to determine the bulk density of the powder.

[Methods for evaluating printing properties]

<Blocking>

5 g of a powder was charged into a chamber having a temperature range 10°C lower than the melting point of the powder and was held therein for 60 minutes. The powder was then inspected for the presence or absence of blocking of the particles.

<Surface roughness, warpage and voids>

1 g of a powder was placed into a recess on a table having a size of 20 mm × 20 mm and a depth of 1.0 mm, and a roller was rolled over the table at a speed of 3 mm/sec. The unit was placed into a chamber having a temperature range 10°C higher than the melting point of the powder and was held therein for 3 minutes. Thereafter, the unit was placed into a chamber having a temperature range 10°C lower than the melting point of the powder and was held therein for 60 minutes. A sintered sample was thus fabricated.
The surface roughness of the sintered sample obtained was measured using a microscope (HIROX CO., LTD., DIGITAL MICROSCOPE KH-8700).
Further, a corner of the sintered sample was fixed to a platen, and the distance in the vertical direction between the platen and other corner most remote from the platen was measured as the amount of warpage of the sintered sample. The quality of warpage was evaluated in accordance with the following criteria.

◯: Less than 1 mm warpage
✕: 1 mm or more warpage

Further, a cross section of the sintered sample was observed with a microscope (HIROX CO., LTD., DIGITAL MICROSCOPE KH-8700) to examine the amount of voids. The quality was evaluated based on the following criteria.

◉: No voids
◯: Few voids
✕: Voids

[EXAMPLE 1]

An ester reaction tank equipped with a stirrer, a nitrogen inlet, a heating device, a thermometer and a distillation tube was charged with 793.6 parts by mass of dimethyl terephthalate, 75.4 parts by mass of isophthalic acid, 613.8 parts by mass of 1,4-butanediol and an amount of tetrabutyl titanate as a catalyst (33 mass ppm in terms of titanium element with respect to a polymer that would be produced).

Next, while performing stirring, the liquid temperature was increased from 150°C to 210°C in 90 minutes and was maintained at 210°C for 90 minutes. During this period, the transesterification reaction and the esterification reaction were performed for a total of 180 minutes while distilling away methanol and water formed.

15 minutes before the completion of the transesterification reaction and the esterification reaction, magnesium acetate tetrahydrate was added in an amount of 48 mass ppm in terms of magnesium metal with respect to the polymer that would be produced, and further a phenolic stabilizer ("Irganox 1010" manufactured by BASF) (0.15 mass% relative to the polymer that would be produced) was added. Subsequently, tetrabutyl titanate (61 mass ppm in terms of titanium element with respect to the polymer that would be produced) was added.

The reaction product was transferred to a polycondensation reaction tank equipped with a stirrer, a nitrogen inlet, a heating device, a thermometer, a distillation tube and a vacuum exhaust port and was subjected to melt polycondensation reaction under reduced pressure.

In the melt polycondensation reaction, the pressure in the tank was gradually reduced from atmospheric pressure to 0.13 kPa in 85 minutes and was held at 0.13 kPa. The reaction temperature was kept at 210°C for 15 minutes from the start of depressurization and was thereafter increased to 235°C in 45 minutes and kept at this temperature. The reaction was terminated when a predetermined stirring torque was reached. The melt polycondensation reaction took 170 minutes.

Next, nitrogen was supplied into the depressurized tank to bring the pressure back to atmospheric pressure and then to an increased pressure, and the polymer was withdrawn. The polymer was extruded from a spinneret as a strand, which was then cooled in a cooling water tank and was cut with a strand cutter into pellets. Thereafter, the pellets were subjected to 25 hours of solid-state polymerization at a pressure of not more than 0.13 kPa and a temperature 20°C lower than the melting point.

Further, the pellets were powdered by high-speed rotary pulverization at 50 to 60°C, and air classification was performed to select spherical particles from the powder.

In the manner described above, a powder of a copolymerized PBT having an isophthalic acid content of 20 mol% was obtained.

The obtained powder of the copolymerized PBT was analyzed to determine the melting peak half width and the heat of melting in a DSC chart, the melting point, Mw, Mv/Mn, the grain size distribution, the circularity, the application factor and the bulk density, and was also treated to evaluate the printing properties. The results are described in Table 1.

[EXAMPLE 2]

A powder of a copolymerized PBT was obtained in the same manner as in EXAMPLE 1, except that the amounts of the comonomer components in EXAMPLE 1 were changed as described in Table 1. The powder obtained was analyzed and evaluated in the same manner as in EXAMPLE 1, the results being described in Table 1.

[COMPARATIVE EXAMPLES 1 to 3]

Powders of a copolymerized PBT were obtained in the same manner as in EXAMPLE 1, except that the amounts of the comonomer components in EXAMPLE 1, the presence or absence of solid-state polymerization, the temperature during pulverization, and the presence or absence of the classification step were changed as described in Table 1. The powders were analyzed and evaluated in the same manner as in EXAMPLE 1, the results being described in Table 1.

[Table 1]

| Items | Subitems | Units | EX. 1 | EX. 2 | COMP. EX. 1 | COMP. EX. 2 | COMP. EX. 3 |
|---|---|---|---|---|---|---|---|
| Comonomer components | Terephthalic acid | mol% | 80 | 90 | 90 | 90 | 90 |
| | Isophthalic acid | mol% | 20 | 10 | 10 | 10 | 10 |
| Solid-state polymerization | Present/Absent | - | Present | Present | Absent | Present | Present |
| Classification | Present/Absent | - | Present | Present | Present | Present | Absent |
| Pulverization | Pulverization temperature | °C | 50-60 | 50-60 | 50-60 | ≤30 | 50-60 |
| Crystallinity | Melting peak half width | °C | 7 | 4.5 | 12 | 11 | 4.5 |
| | Heat of melting | J/g | 53.5 | 57.0 | 43.0 | 50.0 | 57.0 |
| Melting point | | °C | 194.0 | 208.0 | 208.0 | 209.0 | 208.0 |
| Mw | | - | 85,000 | 91,000 | 59,000 | 91,000 | 91,000 |
| Mv/Mn | | - | 1.40 | 1.35 | 2.70 | 2.87 | 3.90 |
| Grain size distribution | D10 | μm | 38.9 | 31.3 | 17 | 22.4 | 32.1 |
| | D50 | μm | 56.2 | 45.7 | 106 | 55.4 | 51.6 |
| | D90 | μm | 94.8 | 75.9 | 497.8 | 110 | 317.2 |
| Circularity | - | - | 0.89 | 0.93 | 0.65 | 0.68 | 0.66 |
| Bulk density | - | g/cc | 0.44 | 0.42 | 0.32 | 0.44 | 0.36 |
| Application factor | - | - | 0.90 | 0.88 | 0.63 | 0.75 | 0.65 |
| Printing properties | Surface roughness | μm | 0.8 | 0.3 | 1.5 | 1.2 | 1.9 |
| | Blocking | - | Absent | Absent | Present | Present | Absent |
| | Warpage | - | ○ | ○ | × | × | ○ |
| | Voids | - | ⊙ | ○ | ○ | ○ | ○ |

As clear from the above results, the copolymerized PBTs of the present invention, by virtue of having a melting peak half width in a DSC chart within the predetermined range, can be pulverized excellently even with a rotary pulverizer blade while ensuring that few particles are elongated or the resin is negligibly softened, that is, the pulverization performance can be enhanced and the resins can be powdered into more spherical shapes. Further, classification after pulverization makes it possible to remove the elongated particles more effectively and thereby to increase the circularity.

The powder for powder bed fusion of the present invention, by virtue of having a grain size distribution within the predetermined range, can be applied in the printing area to form a powder layer with higher thickness accuracy and can fill a recess in the printing table with an enhanced filling factor, and thus can be melted more uniformly when heated with, for example, a laser, an infrared lamp, a xenon lamp or a halogen lamp. As a result, the target three-dimensional article can be manufactured with good printing properties and high accuracy.

**Claims**

1.  A powder for powder bed fusion comprising polybutylene terephthalate, **characterized in that**

    the powder has a grain size distribution where D10 is not less than 20 μm and not more than 42 μm, D50 is

not less than 42 μm and not more than 70 μm, and D90 is not more than 100 μm, the grain size distribution determined as explained in the description,
the powder comprises polybutylene terephthalate having a melting peak half width in a DSC chart of not less than 1°C and not more than 10°C, the DSC chart determined as explained in the description, and
the polybutylene terephthalate comprises structural units derived from a terephthalic acid component and structural units derived from 1,4-butanediol, and further comprises additional structural units derived from a dicarboxylic acid component other than terephthalic acid or from a diol component other than 1,4-butanediol.

2. The powder for powder bed fusion according to Claim 1 , which has a bulk density of not less than 0.2 g/cc and not more than 0.8 g/cc, the bulk density determined as explained in the description.

3. The powder for powder bed fusion according to Claim 1 or 2, which has a circularity of not less than 0.8, the circularity determined as explained in the description.

4. The powder for powder bed fusion according to any one of Claims 1 to 3, wherein the heat of melting in a DSC chart of the polybutylene terephthalate is not less than 45 J/g and not more than 80 J/g, the DSC chart determined as explained in the description.

5. The powder for powder bed fusion according to any one of Claims 1 to 4, wherein the melting point of the polybutylene terephthalate is not less than 170°C and not more than 215°C, the melting point determined as explained in the description.

6. The powder for powder bed fusion according to any one of Claims 1 to 5, wherein the weight average molecular weight of the polybutylene terephthalate is more than 80,000, the weight average molecular weight determined as explained in the description.

7. A method for producing the powder for powder bed fusion described in any one of Claims 1 to 6, the method comprising a pulverization step performed in a manner of pulverization through at least an impact and/or a shear action.

8. The method for producing the powder for powder bed fusion according to Claim 7, wherein the temperature in the pulverization step is not less than 0°C and not more than 80°C.

9. The method for producing the powder for powder bed fusion according to Claim 7 or 8, wherein the method further comprises a classification step.

10. Use of the powder for powder bed fusion described in any one of Claims 1 to 6 in a powder bed fusion process in which the powder material is heated with a heating device to a temperature near the melting point of the resin powder and is sintered into a thin layer in a repeated manner to form a laminated three-dimensional article.

**Patentansprüche**

1. Ein Pulver für die Pulverbettfusion, umfassend Polybutylenterephthalat, **dadurch gekennzeichnet, dass**

das Pulver eine Korngrößenverteilung aufweist, bei der D10 nicht weniger als 20 μm und nicht mehr als 42 μm, D50 nicht weniger als 42 μm und nicht mehr als 70 μm und D90 nicht mehr als 100 μm beträgt, wobei die Korngrößenverteilung wie in der Beschreibung beschrieben bestimmt wird,
das Pulver Polybutylenterephthalat mit einer Halbwertsbreite des Schmelzpeaks in einem DSC-Diagramm von nicht weniger als 1°C und nicht mehr als 10°C umfasst, wobei das DSC-Diagramm wie in der Beschreibung beschrieben bestimmt wird, und
das Polybutylenterephthalat von einer Terephthalsäurekomponente abgeleitete Struktureinheiten und von 1,4-Butandiol abgeleitete Struktureinheiten umfasst, und ferner zusätzliche Struktureinheiten, welche von einer anderen Dicarbonsäurekomponente als Terephthalsäure oder von einer anderen Diolkomponente als 1,4-Butandiol abgeleitet sind, umfasst.

2. Das Pulver für die Pulverbettfusion gemäß Anspruch 1, welches eine Schüttdichte von nicht weniger als 0,2 g/cm$^3$ und nicht mehr als 0,8 g/cm$^3$ aufweist, wobei die Schüttdichte wie in der Beschreibung beschrieben bestimmt wird.

3. Das Pulver für die Pulverbettfusion gemäß Anspruch 1 oder 2, welches eine Rundheit von nicht weniger als 0,8 aufweist, wobei die Rundheit wie in der Beschreibung beschrieben bestimmt wird.

4. Das Pulver für die Pulverbettfusion gemäß einem der Ansprüche 1 bis 3, wobei die Schmelzwärme in einem DSC-Diagramm des Polybutylenterephthalats nicht weniger als 45 J/g und nicht mehr als 80 J/g beträgt, wobei das DSC-Diagramm wie in der Beschreibung beschrieben bestimmt wird.

5. Das Pulver für die Pulverbettfusion gemäß einem der Ansprüche 1 bis 4, wobei der Schmelzpunt des Polybutylenterephthalats nicht weniger als 170°C und nicht mehr als 215°C beträgt, wobei der Schmelzpunkt wie in der Beschreibung beschrieben bestimmt wird.

6. Das Pulver für die Pulverbettfusion gemäß einem der Ansprüche 1 bis 5, wobei das Gewichtsmittel des Molekulargewichts des Polybutylenterephthalats mehr als 80000 beträgt, wobei das Gewichtsmittel des Molekulargewichts wie in der Beschreibung beschrieben bestimmt wird.

7. Ein Verfahren zur Herstellung des Pulvers für die Pulverbettfusion wie in einem der Ansprüche 1 bis 6 beschrieben, wobei das Verfahren einen Pulverisierungsschritt umfasst, welcher auf eine Art und Weise der Pulverisierung durch mindestens eine Schlag- und/oder Scherwirkung durchgeführt wird.

8. Das Verfahren zur Herstellung des Pulvers für die Pulverbettfusion gemäß Anspruch 7, wobei die Temperatur in dem Pulverisierungsschritt nicht weniger als 0°C und nicht mehr als 80°C beträgt.

9. Das Verfahren zur Herstellung des Pulvers für die Pulverbettfusion gemäß Anspruch 7 oder 8, wobei das Verfahren ferner einen Klassierungsschritt umfasst.

10. Verwendung des Pulvers für die Pulverbettfusion wie in einem der Ansprüche 1 bis 6 beschrieben in einem Verfahren zur Verschmelzung im Pulverbett, bei welchem das Pulvermaterial mit einer Heizvorrichtung auf eine Temperatur nahe dem Schmelzpunkt des Harzpulvers erwärmt wird und wiederholt in eine dünne Schicht gesintert wird, um einen laminierten dreidimensionalen Gegenstand zu bilden.

**Revendications**

1. Poudre pour fusion sur lit de poudre comprenant du poly(téréphtalate de butylène), **caractérisée en ce que**

la poudre a une distribution de taille de grains où D10 n'est pas inférieur à 20 $\mu$m et pas supérieur à 42 $\mu$m, D50 n'est pas inférieur à 42 $\mu$m et pas supérieur à 70 $\mu$m, et D90 n'est pas supérieur à 100 $\mu$m, la distribution de taille de grains étant déterminée comme expliqué dans la description,
la poudre comprend du poly(téréphtalate de butylène) ayant une largeur à mihauteur de pic de fusion dans un diagramme de DSC non inférieure à 1 °C et non supérieure à 10 °C, le diagramme de DSC étant déterminé comme expliqué dans la description, et
le poly(téréphtalate de butylène) comprend des motifs structurels dérivés d'un composant acide téréphtalique et des motifs structurels dérivés de 1,4-butanediol, et comprend en outre des motifs structurels additionnels dérivés d'un composant acide dicarboxylique autre que l'acide téréphtalique ou d'un composant diol autre que le 1,4-butanediol.

2. Poudre pour fusion sur lit de poudre selon la revendication 1, qui a une masse volumique apparente non inférieure à 0,2 g/cm$^3$ et non supérieure à 0,8 g/cm$^3$, la masse volumique apparente étant déterminée comme expliqué dans la description.

3. Poudre pour fusion sur lit de poudre selon la revendication 1 ou 2, qui a une circularité non inférieure à 0,8, la circularité étant déterminée comme expliqué dans la description.

4. Poudre pour fusion sur lit de poudre selon l'une quelconque des revendications 1 à 3, dans laquelle la chaleur de fusion dans un diagramme de DSC du poly(téréphtalate de butylène) n'est pas inférieure à 45 J/g et pas supérieure à 80 J/g, le diagramme de DSC étant déterminé comme expliqué dans la description.

5. Poudre pour fusion sur lit de poudre selon l'une quelconque des revendications 1 à 4, dans laquelle le point de fusion du poly(téréphtalate de butylène) n'est pas inférieur à 170 °C et pas supérieur à 215 °C, le point de fusion étant déterminé comme expliqué dans la description.

6. Poudre pour fusion sur lit de poudre selon l'une quelconque des revendications 1 à 5, dans laquelle la masse moléculaire moyenne en masse du poly(téréphtalate de butylène) est supérieure à 80 000, la masse moléculaire moyenne en masse étant déterminée comme expliqué dans la description.

7. Méthode pour produire la poudre pour fusion sur lit de poudre décrite dans l'une quelconque des revendications 1 à 6, la méthode comprenant une étape de pulvérisation effectuée à la manière d'une pulvérisation par l'intermédiaire d'au moins une action d'impact et/ou de cisaillement.

8. Méthode pour produire une poudre pour fusion sur lit de poudre selon la revendication 7, dans laquelle la température dans l'étape de pulvérisation n'est pas inférieure à 0 °C et pas supérieure à 80 °C.

9. Méthode pour produire une poudre pour fusion sur lit de poudre selon la revendication 7 ou 8, laquelle méthode comprend en outre une étape de classification.

10. Utilisation de la poudre pour fusion sur lit de poudre décrite dans l'une quelconque des revendications 1 à 6 dans un procédé de fusion sur lit de poudre dans lequel le matériau en poudre est chauffé par un dispositif chauffant jusqu'à une température proche du point de fusion de la poudre de résine et est fritté en une couche mince d'une manière répétée pour former un article tridimensionnel stratifié.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016121013 A
- JP 2018086757 A
- US 2018147780 A1
- US 2007182070 A1
- JP 2015025127 A